Europäisches Patentamt

European Patent Office

Office européen des brevets

(19)

(11) **EP 1 361 457 A1**

(12) **EUROPEAN PATENT APPLICATION**

(43) Date of publication:
**12.11.2003 Bulletin 2003/46**

(51) Int Cl.⁷: **G01S 13/76**, G01S 13/58

(21) Application number: **02253184.2**

(22) Date of filing: **07.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Zelinda Ltd**
**Wallingford, Oxfordshire OX10 9BQ (GB)**

(72) Inventor: **ELY, Robert James**
**Wallingford, Oxfordshire OX10 9BQ (GB)**

(74) Representative: **Boden, Keith McMurray**
**Fry Heath & Spence LLP**
**The Gables**
**Massetts Road**
**Horley Surrey RH6 7DQ (GB)**

(54) **System and method for performing space vehicle range-rate measurements**

(57)    A system for performing range-rate and integrated range-rate measurements between two transmit-receive units, such as a ground station and a space vehicle, which avoids the need to generate a coherent turnaround ratio between the receiver and transmitter frequencies at the remote unit. The system effectively makes Doppler measurements at the remote unit as well as at the local, measurement unit, transmits digitally-encoded data from the remote unit to the measurement unit, which data enables range-rate information and the remote reference frequency to be calculated.

Fig. 1

Printed by Jouve, 75001 PARIS (FR)

**Description**

The present invention relates to a measurement system for and a method of determining space vehicle range-rate and integrated range-rate measurements, in particular the radial velocity of a space vehicle relative to a ground station or another space vehicle.

Range-rate and integrated range-rate measurements for space vehicle navigation are well known. Known measurement systems utilize a coherent turnaround ratio between the carrier frequency of the signal received by the receiver on board the space vehicle and the carrier frequency of the signal transmitted from the space vehicle. Such known systems do, however, suffer from a number of disadvantages.

One disadvantage is that the transponder on board the space vehicle is necessarily complicated in having to be configured to generate the coherent turnaround frequency.

Another disadvantage is that the transponder on board the space vehicle normally has to operate in a non-coherent mode for some of the time, for example, when there is no up-link signal, but telemetry data still has to be transmitted from the space vehicle to a ground station. When the transponder switches between a non-coherent mode and a coherent mode, there is normally a loss of telemetry at the ground station owing to the step change in frequency from the transponder on board the space vehicle.

A further disadvantage is that the transmission frequency from the space vehicle is not fixed so that any change of group delay with frequency in the transmitter on board the space vehicle effects accuracy.

A still further disadvantage is that the fixed turnaround ratio required between the frequencies of the receiver and the transmitter restricts the possibilities for frequency allocation within the limited capacity of frequency bands allocated to space communication.

A yet further disadvantage is that the Doppler frequency offset at the ground station is typically twice as large when coherent frequency turnaround is used, increasing the acquisition time and requiring a wider tracking loop bandwidth in the receiver at the ground station.

An aim of the present invention is to enable range-rate measurements to be made using a non-coherent transponder on board a space vehicle as a remote unit. In this way, the design of the transponder is simplified, the problems associated with switching between non-coherent and coherent modes is obviated, allowing a freedom of choice in allocating the transmit and receive frequencies, which may be in different frequency bands, and the Doppler offset seen at a measurement unit, such as a ground station, is reduced during range-rate measurements.

The present invention determines the received frequencies at both ends of the communications link, in each case using a local frequency reference. Data obtained from the measurement on board a space vehicle as a remote unit, such as an orbiting space vehicle, is telemetered to a measurement unit, such as a ground station, where the two measurements are combined to enable calculation of both the frequency of the on-board reference oscillator and the integrated Doppler shift over a measurement interval, thus providing a measurement of the range rate.

In the present invention, the remote unit includes a transponder in which the transmitted frequency is fixed by being derived from an on-board master oscillator. With this configuration, the receiver on board the remote unit is able to measure the total phase change of a received signal over a period of time using the same master oscillator as a reference.

In the present invention, the measurement unit includes a transmitter which operates at a frequency derived from a local master oscillator, and a receiver which is able to measure the total phase change of a signal received from the remote unit over a period of time using the same master oscillator as a reference.

The results of the phase-change measurements performed by the transponder on board the remote unit are relayed to the measurement unit via a telemetry channel. In this way, both the range rate and the frequency of the master oscillator on board the space vehicle can be accurately determined.

In one aspect the present invention provides a range-rate measurement system for determining range-rate information for a remote unit relative to a measurement unit, the system comprising: a remote unit comprising an oscillator for providing a local reference frequency, a signal receiver for receiving a signal and determining over a time period frequency information relative to the local reference frequency, and a signal transmitter for encoding and transmitting the frequency information in a signal at a frequency derived from the local reference frequency; and a measurement unit for determining range-rate information, the measurement unit comprising a signal transmitter for transmitting a signal to the remote unit, a signal receiver for receiving a signal from the remote unit and decoding the frequency information encoded therein, and a frequency ratio determiner for determining a value of a ratio of the frequencies of the received and transmitted signals at the remote unit from the frequency information and a value of a ratio of the received and transmitted signals at the measurement unit, from which values range-rate information can be determined.

In another aspect the present invention provides a method of determining range-rate information for a remote unit relative to a measurement unit, the method comprising the steps of: transmitting a first signal from a measurement unit; receiving the first signal at a remote unit; determining at the remote unit over a time period frequency information relative to a local reference frequency; encoding and transmitting the frequency information in a second signal at a frequency derived from the local reference frequency; receiving the second signal at the measurement unit; decoding the frequency information encoded in the second signal at the measurement unit; determining at the measurement unit a value of a ratio of the frequencies of the first signal as received and the second signal as transmitted from the frequency information; determining at the measurement unit a value of a ratio of the frequencies of the first signal as transmitted and the second signal as received; and determining range-rate information from the determined ratio values.

The present invention enables consecutive range-rate measurements to be added in a non-destructive manner to provide a high-resolution determination of the range of a space vehicle with an unknown integration constant.

A preferred embodiment of the present invention will now be described hereinbelow by way of example only with reference to the accompanying drawings, in which:

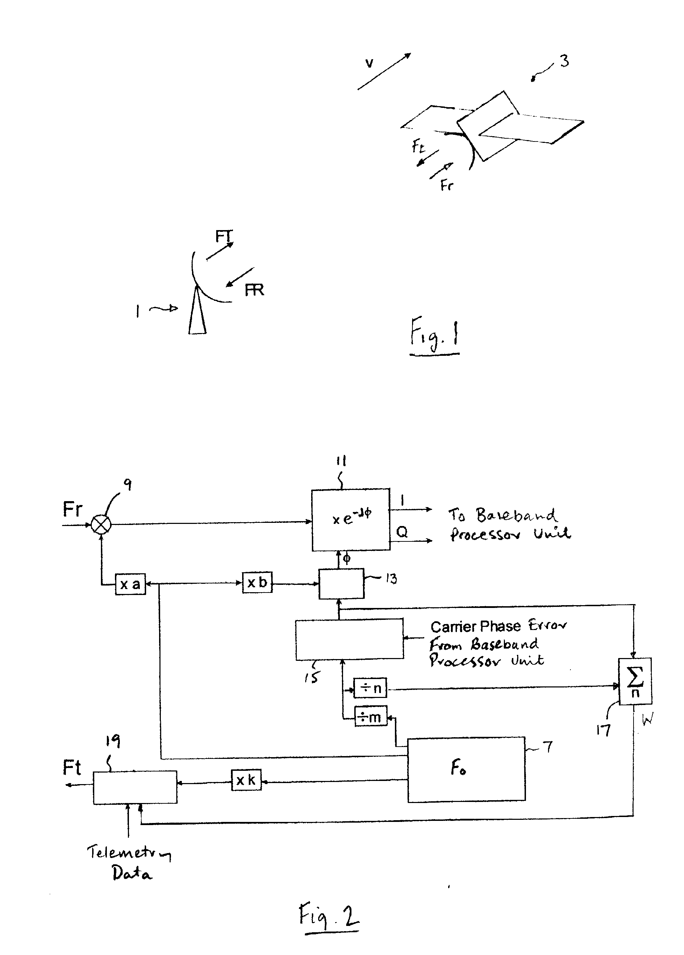

Figure 1 illustrates a measurement system for determining the range-rate between a ground station and a space vehicle in accordance with a preferred embodiment of the present invention; and

Figure 2 illustrates a block diagram of part of the transponder of the space vehicle of Figure 1.

The measurement system comprises a ground station 1 and an orbiting space vehicle 3, in this embodiment a satellite, which is in communication with the ground station 1 and in orbit moves radially relative thereto.

In this embodiment the communications link used for range-rate measurement is the same communications link as used for telecommand, telemetry and ranging operations. In another embodiment a separate communications link could be used.

When a signal is transmitted from the ground station 1 with a frequency $FT$, the signal will be received at the space vehicle 3 with a different frequency $Fr$, which received frequency $Fr$ differs from the transmitted frequency $FT$ owing to the Doppler effect arising as a result of the relative motion of the ground station 1 and the space vehicle 3.

Similarly, when a signal is transmitted from the space vehicle 3 with a frequency $Ft$, the signal will be received at the ground station 1 with a different frequency $FR$, which received frequency $FR$ differs from the transmitted frequency $Ft$ likewise owing to the Doppler effect.

The relationship between the transmitted and received signals can be expressed as:

$$\frac{Fr}{FT} = \frac{FR}{Ft} = \sqrt{\frac{1 - v/c}{1 + v/c}} \qquad (1)$$

where: $v$ is the relative velocity between the ground station 1 and the space vehicle 3, that is, the range rate; and
    $c$ is the speed of light.

Expressing equation (1) differently:

$$\frac{Fr}{FT} \cdot \frac{FR}{Ft} = \frac{FR}{FT} \cdot \frac{Fr}{Ft} = \frac{1 - v/c}{1 + v/c} \qquad (2)$$

By writing:

$$\frac{FR}{FT} \cdot \frac{Fr}{Ft} = q \qquad (3)$$

Then, by combining equations (2) and (3), the range rate $v$ can be expressed as:

$$\nu = c \cdot \frac{1-q}{1+q} \qquad (4)$$

In existing range-rate measurement systems, where the transponder on a space vehicle is operated in a coherent mode when performing range-rate measurements, the ratio $Fr/Ft$ is a constant, and the value of the ratio $FR/FT$ is determined at a ground station in order to allow determination of the range rate $\nu$.

In the measurement system of the present invention, where the transponder on board the space vehicle 3 is a non-coherent transponder operated in a non-coherent mode, the frequency $Ft$ of a signal transmitted from the space vehicle 3 is derived from the predetermined frequency $Fo$ of a local frequency reference on board the space vehicle 3. The ratio $Ft/Fo$ thus has a fixed predetermined value which is known at the ground station 1.

In general, the accuracy of the frequency reference on board the space vehicle 3 will not be as good as the frequency reference at the ground station 1, and will be subject to variations due to temperature and ageing.

In operation, the receiver on board the space vehicle 3 measures the frequency $Fr$ of a signal as received at the space vehicle 3 relative to the reference frequency $Fo,$ and so determines the ratio $Fr/Fo$.

By transmitting sufficient information relating to the determined ratio $Fr/Fo$ from the space vehicle 3 to the ground station 1 as to enable the value of the ratio $Fr/Fo$ to be determined at the ground station 1, the ratio $Fr/Ft$ can be determined, where the value of the ratio $Ft/Fo$ is known at the ground station 1.

The ratio $Fr/Ft$ can be expressed as:

$$\frac{Fr}{Ft} = \frac{Fr/Fo}{Ft/Fo} \qquad (5)$$

From the determined value of the ratio $Fr/Ft$ and the value of the ratio $FR/FT$ of the frequencies $FR$, $FT$ of the received and transmitted signals at the ground station 1, the range rate $\nu$ can be determined from the application of equation (4).

In one embodiment the value of the ratio $Fr/Fo$ is transmitted directly in the telemetered data.

In an alternative embodiment, in order to reduce the amount of data to be transmitted, the value of the ratio $Fro/Fo$, where $Fro$ is the receiver centre frequency, which is nominally constant and known at both the ground station 1 and the space vehicle 3, could be subtracted from the determined ratio $Fr/Fo$, and only the difference ratio $Fd/Fo$ transmitted.

The difference ratio $Fd/Fo$ can be expressed as:

$$\frac{Fd}{Fo} = \left( \frac{Fr}{Fo} \right) - \left( \frac{Fro}{Fo} \right) \qquad (6)$$

From the values of the ratios $Fd/Fo$ and $Fro/Fo$, the value of the ratio $Fr/Fo$ can be determined at the ground station 1.

The telemetered value will generally arrive at the ground station 1 some time after the on-board measurement has been made due to a time delay introduced in the telemetry system. In one embodiment the time delay is predicted to provide for time-delay compensation. In another embodiment time-tag data is included in the telemetered data to provide for time-delay compensation. With such time-delay compensation, the range-rate information is rendered more accurate. Such time-delay compensation may be unnecessary for configurations where the range rate $\nu$ varies only slowly with time.

From the determined range-rate $\nu$, the change in range $\Delta R$ is determined as follows:

$$\Delta R = R - Ro = \int_{to}^{t} v \cdot dt \qquad (7)$$

where: $R$ is the range; and

$Ro$ is the initial range.

Where the values of the ratio $Fo/Ft$ and the frequency $FR$ of a signal as received at the ground station 1 are known or determinable at the ground station 1, the reference frequency $Fo$ of the frequency reference on board the space vehicle 3 is determined as follows:

$$Fo = \left(\frac{Fo}{Ft}\right) \cdot FR \cdot \sqrt{\frac{1 + v/c}{1 - v/c}} \qquad (8)$$

Figure 2 illustrates a block diagram of part of the transponder on board the space vehicle 3. The transponder is a non-coherent transponder which is operated in a non-coherent mode. In this embodiment the transponder at the ground station 1 for generating a transmission signal of frequency $FT$ and determining the frequency of a received signal $FR$ has the same architecture as the transponder on board the space vehicle 3.

The transponder comprises a stable reference oscillator 7 for generating a signal of a predetermined reference frequency $Fo$. In this embodiment all frequencies used in the receiver and transmitter are derived from the one master reference oscillator 7.

The transponder further comprises a down-converter 9 for down-converting a signal of frequency $Fr$ as received from the ground station 1, in this embodiment by superheterodyne processing with a predetermined frequency $a \cdot Fo$. In an alternative embodiment the down-converter 9 could comprise a sub-harmonic sampler.

The transponder further comprises a variable frequency element 11 for converting the received signal, as down-converted, to baseband quadrature signals.

The transponder further comprises a number-controlled oscillator (NCO) 13, which is clocked at a constant frequency, in this embodiment a constant frequency $b \cdot Fo$, and, on every clock pulse, outputs a phase value $\phi$ to the variable frequency element 11, the phase value $\phi$ representing the phase of the variable frequency element 11.

The transponder further comprises a digital-carrier tracking loop 15 which derives a digital word $w$, referred to as a phase increment word, from the baseband signals, where the value of the phase increment word $w$ is derived from the baseband signals such as to maintain the receiver phase-locked to the received signal. The phase increment word $w$ is updated at fixed time intervals, in this embodiment at intervals of $m/Fo$, where $m$ is a predetermined constant.

The transponder further comprises an accumulator 17 for summing the updated phase increment words $w$, with any overflow in each addition being ignored. Each time the phase increment word $w$ is updated, the value of phase increment word $w$ is added in the accumulator 17 which generates a phase increment sum $W$ of all phase increments over a predetermined number $n$ of update periods.

The phase increment sum $W$ can be expressed as:

$$W = \sum_{i=1}^{n} w_i \qquad (9)$$

The transponder further comprises a modulator 19 for digitally-encoding the value of the phase increment sum $W$ with the telemetry data in a signal transmitted from the space vehicle 3. The frequency $Ft$ of the signal transmitted from the space vehicle 3 is generated by multiplication of the reference frequency $Fo$ with a predetermined constant $k$.

In the frequency plan of this embodiment, when the receiver is phase-locked to the received signal, the frequency $Fr$ of a signal received at the space vehicle 3 can be expressed as:

$$Fr = a \cdot Fo + \frac{w \cdot b \cdot Fo}{2^d} \qquad (10)$$

where: $d$ is the number of bits in the accumulator 17.

In a measurement period $t$, where:

$$t = \frac{m \cdot n}{Fo} \qquad (11)$$

the total phase change $P$ in cycles of the received signal is:

$$P = a \cdot m \cdot n + \frac{W \cdot m \cdot b}{2^d} \qquad (12)$$

The average value of the frequency $Fr$ of the signal as received at the space vehicle 3 over the measurement period $t$ is:

$$Fr = h \cdot Fo \qquad (13)$$

where:

$$h = \frac{P}{t} = a + \frac{W \cdot b}{n \cdot 2^d} \qquad (14)$$

Thus, the ratio $Fr/Fo$ can be expressed as:

$$\frac{Fr}{Fo} = h \qquad (15)$$

Thus, in order to determine the value of the parameter $h$, and hence the value of the ratio $Fr/Fo$, at the ground station 1, only the value of the phase increment sum $W$ has to be telemetered, as the other parameters in equation (14) are fixed by the design of the transponder, and hence known.

From the determined value of the ratio $Fr/Fo$, the value the ratio $Fr/Ft$ can be determined from the application of equation (5), where the value of the ratio $Ft/Fo$ is known at the ground station 1.

From the determined value of the ratio $Fr/Ft$ and the value of the ratio $FR/FT$ of the frequencies $FR$, $FT$ of the received and transmitted signals at the ground station 1, the range rate $v$ can be determined from the application of equation (4).

In this embodiment the telemetry system provides a means, here an indicator, of relating the time period from which the value of the phase increment sum $W$ was obtained to the time that the value appears in the telemetry stream.

By way of example, suppose range-rate measurements are to be made once per second, and the digital-carrier tracking loop 15 is updated at a rate of 100 kHz, such that $n$ = 100000. If the phase increment word $w$ is 32 bits, then the phase increment sum $W$ will not be greater then 47 bits. As the phase increment sum $W$ has only to be transmitted once per second, the telemetry data rate required to support the range-rate function is not more than 47 bits per second, which rate will generally be small compared to available telemetry rates.

In a preferred embodiment only the offset from the receiver centre frequency $Fro$, rather than the complete phase increment word w, is accumulated, so the number of bits required can be reduced.

In another preferred embodiment the accumulator 17, instead of being reset at the start of each measurement period $t$, could add the $n$ values of the phase increment word $w$ obtained in a measurement period $t$ to the previous sum. Assuming that the values are represented in twos-complement form, the value of the phase increment sum $W$ can be recovered at the ground station 1 by taking the difference between consecutive transmitted values. This technique would be of benefit when there is a risk of loss of data in the telemetry stream due to bit errors when the signal-to-noise ratio is poor, because, when data is missing, the total phase change between the values either side of the outage can be determined. The effect of missing data is simply that the measurement interval is increased.

Finally, it will be understood that the present invention has been described in its preferred embodiment and can be modified in many different ways without departing from the scope of the claimed invention as defined by the appended claims.

As described in the preferred embodiment, a typical application for the present invention is to measure the range rate between a ground station and an orbiting satellite. The present invention is, however, equally applicable to making range-rate measurements between two space vehicles.

Also, in modifications, frequency counters could be used to perform the measurements instead of accumulating phase increment words w, feed-forward carrier correction could be used instead of feed-back carrier correction, and the signals used for the communications link could be modulated with telecommand, telemetry, ranging or other data provided that the modulation schemes allow for the recovery of the carrier frequency, and preferably phase, in the receivers.

**Claims**

1. A range-rate measurement system for determining range-rate information for a remote unit relative to a measurement unit, the system comprising:

   a remote unit comprising an oscillator for providing a local reference frequency, a signal receiver for receiving a signal and determining over a time period frequency information relative to the local reference frequency, and a signal transmitter for encoding and transmitting the frequency information in a signal at a frequency derived from the local reference frequency; and
   a measurement unit for determining range-rate information, the measurement unit comprising a signal transmitter for transmitting a signal to the remote unit, a signal receiver for receiving a signal from the remote unit and decoding the frequency information encoded therein, and a frequency ratio determiner for determining a value of a ratio of the frequencies of the received and transmitted signals at the remote unit from the frequency information and a value of a ratio of the received and transmitted signals at the measurement unit, from which values range-rate information can be determined.

2. The system of claim 1, wherein the frequency of the signal transmitted from the remote unit is the local reference frequency multiplied by a predeterminable constant.

3. The system of claim 1 or 2, wherein the frequency information is an average frequency of the signal received at the remote unit over the time period.

4. The system of claim 1 or 2, wherein the frequency information is the total phase change of the signal received at the remote unit over the time period.

5. The system of any of claims 1 to 4, wherein the measurement unit further comprises a reference frequency determiner for determining the local reference frequency at the remote unit relative to a local reference frequency at the measurement unit.

6. The system of any of claims 1 to 5, wherein the signal receiver of the remote unit includes a number-controlled oscillator for generating a frequency of the signal received at the remote unit.

7. The system of any of claims 1 to 5, wherein the signal receiver of the measurement unit includes a number-controlled oscillator for generating a frequency of the signal received at the measurement unit.

8. The system of claim 6, wherein the signal receiver of the remote unit further includes a digital-carrier tracking loop which derives and loads phase increment words over the time period into the number-controlled oscillator, where the phase increment words have values which are such as to maintain the receiver phase-locked to the signal received at the remote unit.

9. The system of claim 7, wherein the signal receiver of the measurement unit further includes a digital-carrier tracking loop which derives and loads phase increment words over the time period into the number-controlled oscillator, where the phase increment words have values which are such as to maintain the receiver phase-locked to the signal received at the measurement unit.

10. The system of claim 8, wherein the signal receiver of the remote unit further includes an accumulator which sums the phase increment words loaded into the number-controlled oscillator.

11. The system of claim 9, wherein the signal receiver of the measurement unit further includes an accumulator which sums the phase increment words loaded into the number-controlled oscillator.

12. The system of any of claims 1 to 11, wherein the communications link is modulated.

13. The system of claim 12, wherein the modulation is with telecommand, telemetry or ranging signal data.

14. The system of any of claims 1 to 13, wherein the measurement unit is provided at a ground station.

15. The system of any of claims 1 to 13, wherein the measurement unit is provided at an orbiting space vehicle.

16. The system of any of claims 1 to 15, wherein the remote unit is provided on board an orbiting space vehicle.

17. The system of any of claims 1 to 13, wherein the measurement unit is in a planetary orbiter and the remote unit is in one of a planetary lander or a free flying sub-satellite or probe.

18. A method of determining range-rate information for a remote unit relative to a measurement unit, the method comprising the steps of:

transmitting a first signal from a measurement unit;
receiving the first signal at a remote unit;
determining at the remote unit over a time period frequency information relative to a local reference frequency;
encoding and transmitting the frequency information in a second signal at a frequency derived from the local reference frequency;
receiving the second signal at the measurement unit;
decoding the frequency information encoded in the second signal at the measurement unit;
determining at the measurement unit a value of a ratio of the frequencies of the first signal as received and the second signal as transmitted from the frequency information;
determining at the measurement unit a value of a ratio of the frequencies of the first signal as transmitted and the second signal as received; and
determining range-rate information from the determined ratio values.

Fig. 1

Fig. 2

European Patent Office

**EUROPEAN SEARCH REPORT**

Application Number

EP 02 25 3184

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 745 072 A (BOKULIC ROBERT STEVEN ET AL) 28 April 1998 (1998-04-28) | 1,2,4, 12-14, 16,18 | G01S13/76 G01S13/58 |
| Y | * abstract; figures 1,2 * <br> * column 1, line 13 - column 4, line 7 * <br> --- | 6 | |
| X | US 5 995 039 A (BOKULIC ROBERT STEVEN ET AL) 30 November 1999 (1999-11-30) <br><br> * abstract; figures 1-4 * <br> * column 4, line 17 - column 7, line 30 * <br> --- | 1,2,4, 12-14, 16,18 | |
| X | JENSEN J R ET AL: "Accurate Doppler navigation with a simple spacecraft transceiver" <br> AEROSPACE CONFERENCE, 1999. PROCEEDINGS. 1999 IEEE SNOWMASS AT ASPEN, CO, USA 6-13 MARCH 1999, PISCATAWAY, NJ, USA,IEEE, US, 6 March 1999 (1999-03-06), pages 245-254, XP010350311 <br> ISBN: 0-7803-5425-7 <br> * Section 3. "New Method", page 246 - page 247; figure 1 * <br> --- | 1,2,4, 12-14, 16,18 | |
| X | JENSEN J R ET AL: "Highly accurate, noncoherent technique for spacecraft Doppler tracking" <br> IEEE TRANSACTIONS ON AEROSPACE AND ELECTRONIC SYSTEMS, JULY 1999, IEEE, USA, vol. 35, no. 3, pages 963-973, XP002215666 <br> ISSN: 0018-9251 <br> * page 965 - page 967; figures 1,2 * <br> --- <br><br> -/-- | 1,2,4, 12-14, 16,18 | TECHNICAL FIELDS SEARCHED (Int.Cl.7) <br><br> G01S |

The present search report has been drawn up for all claims

| Place of search | Date of completion of the search | Examiner |
|---|---|---|
| THE HAGUE | 4 October 2002 | Niemeijer, R |

EPO FORM 1503 03.82 (P04C01)

**European Patent Office**

**EUROPEAN SEARCH REPORT**

Application Number

EP 02 25 3184

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 98 43372 A (UNIV LELAND STANFORD JUNIOR) 1 October 1998 (1998-10-01) * abstract; figure 5 * * page 12, line 23 - line 29 * * page 15, line 31 - page 16, line 12 * --- | 6 | |
| E | GB 2 368 738 A (ELY ROBERT JAMES) 8 May 2002 (2002-05-08) * the whole document * ----- | 1-18 | |

TECHNICAL FIELDS
SEARCHED      (Int.Cl.7)

The present search report has been drawn up for all claims

| Place of search | Date of completion of the search | Examiner |
|---|---|---|
| THE HAGUE | 4 October 2002 | Niemeijer, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 02 25 3184

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2002

| Patent document cited in search report | | Publication date | Patent family member(s) | | Publication date |
|---|---|---|---|---|---|
| US 5745072 | A | 28-04-1998 | US | 5995039 A | 30-11-1999 |
| US 5995039 | A | 30-11-1999 | US | 5745072 A | 28-04-1998 |
| WO 9843372 | A | 01-10-1998 | AU | 727360 B2 | 14-12-2000 |
| | | | AU | 6942398 A | 20-10-1998 |
| | | | EP | 0968577 A1 | 05-01-2000 |
| | | | JP | 2001523335 T | 20-11-2001 |
| | | | WO | 9843372 A1 | 01-10-1998 |
| | | | US | 6373432 B1 | 16-04-2002 |
| GB 2368738 | A | 08-05-2002 | NONE | | |

EPO FORM P0459

For more details about this annex : see Official Journal of the European Patent Office, No. 12/82